# EUROPÄISCHE PATENTSCHRIFT

(11) **EP 3 679 912 B1**
(45) Veröffentlichungstag und Bekanntmachung des Hinweises auf die Patenterteilung: **01.09.2021**
(21) Anmeldenummer: 19215744.4
(22) Anmeldetag: 12.12.2019
(51) Int. Cl.: A61G 5/06, B60G 3/01, B62B 9/22, A61G 5/10

(54) **ROLLSTUHL ZUR ÜBERWINDUNG VON HINDERNISSEN**
WHEELCHAIR FOR OVERCOMING OBSTACLES
FAUTEUIL ROULANT PERMETTANT DE SURMONTER DES OBSTACLES

(30) Priorität: 09.01.2019 CH 162019
(43) Veröffentlichungstag der Anmeldung: 15.07.2020
(73) Patentinhaber: Ammann, Gerda, 9500 Wil (CH)
(72) Erfinder: Ammann, Paul, 9500 Wil (CH)
(74) Vertreter: Hepp Wenger Ryffel AG

(56) Entgegenhaltungen:
- WO-A1-88/03012
- WO-A1-2010/056193
- DE-A1- 3 415 524
- FR-A1- 3 057 158
- GB-A- 2 139 576
- US-B2- 7 426 970

## Beschreibung

Die Erfindung betrifft einen Rollstuhl zur Überwindung von Hindernissen, gemäss dem Oberbegriff des unabhängigen Anspruchs.

Aus dem Stand der Technik sind Rollstühle bekannt, die Hindernisse, wie beispielsweise Treppen, überwinden können.

Die Patentschrift EP 0100449 zeigt einen Rollstuhl, der selbsttätig Treppen herauf- und herunterfahren kann, dadurch gekennzeichnet, dass das Fahrgestell zwei parallel zueinander liegende Rahmen aufweist, an denen ein Druckluftbehälter mit zugeordnetem Kompressor und Kolben-Zylinder-Einheiten derart angeordnet sind, dass die Rahmen mit den Kolben-Zylinder-Einheiten in der seitlichen Projektion nach Art eines Parallelogrammgestänges verstellbar sind. So kann der Sitz seine waagrechte Stellung bei unterschiedlichen Relativstellungen beibehalten.

Von Nachteil ist, dass bei Hindernissen mit grossen vertikalen Abständen die Fortbewegung mit dem beschriebenen Rollstuhl Zeit benötigt, da die Kolben-Zylinder-Einheit weit aus- und wieder eingefahren werden muss. Ausserdem wird durch einen grossen Abstand zur Bodenoberfläche das Sicherheitsempfinden des Rollstuhlinsassen deutlich gesenkt.

In WO 2010/056193 A1 ist eine Transportvorrichtung 1 offenbart, welche eine Nutzlastaufnahmeeinheit 30, einen Transportkörper 10 und ein Kompensationssystem 20 umfasst. Das Kompensationssystem 20 ist so angeordnet und ausgelegt, dass es eine spezifische räumliche Anordnung der Nutzlasteinheit 30 ermöglicht. Das Kompensationssystem 20 behält unabhängig von der Orientierungsänderung der Transportfläche 150 die gewünschte Orientierung der Nutzlastoberfläche 301 bei.Es ist die Aufgabe der vorliegenden Erfindung, einen Rollstuhl zur Überwindung von Hindernissen zu schaffen, welcher die Nachteile des Stands der Technik vermeidet und eine sichere und komfortable Fortbewegung ermöglicht.

Diese Aufgabe wird durch einen Rollstuhl zur Überwindung von Hindernissen, gemäss dem unabhängigen Anspruch 1 gelöst.

Erfindungsgemäss umfasst der Rollstuhl zur Überwindung von Hindernissen, insbesondere Stufen und Treppen, mehrere Laufrollen. Hierbei sind die Laufrollen in mindestens zwei Reihen angeordnet. Die Reihen wiederum sind an beiden Seiten des Rollstuhls angeordnet. Weiter umfasst der Rollstuhl ein Fahrgestell, an oder in welchem ein Sitz angeordnet ist. Der Sitz ist derart an bzw. in dem Fahrgestell gelagert, dass er bei der Überwindung eines Hindernisses in einer im Wesentlichen waagrechten Sitzposition verbleibt. Jede der Laufrollen ist derart über je mindestens eine Aufhängung an dem Fahrgestell angeordnet, so dass die Aufhängung gegenüber der Trittfläche einer Stufe in Fahrtrichtung einen Winkel von < 90 ° einschliesst.

Mehrere Laufrollen in einer Reihe haben den Vorteil, dass beispielsweise beim Treppensteigen des Rollstuhls die ersten Laufrollen in Fahrtrichtung des Rollstuhls bereits mittels Führungsrohr angehoben werden können, während die folgenden Laufrollen noch in Kontakt mit der Bodenoberfläche sind. Dies ermöglicht ein stabiles Fortbewegen des Rollstuhls beim Überwinden von Hindernissen.

Einen Winkel von < 90 ° zwischen der Aufhängung der Laufrollen und der Trittfläche einer Stufe in Fahrtrichtung ist besonders vorteilhaft, da sowohl die Sitzfläche, als auch der Schwerpunkt des Rollstuhls sich in relativ kurzem Abstand zur Bodenoberfläche befinden.

Der offenbarte Rollstuhl hat den Vorteil, dass Hindernisse überwunden werden können, ohne dabei die Sicherheit oder das Sicherheitsgefühl des Rollstuhlinsassen gegenüber einer barrierefreien Fortbewegung zu verringern.

Vorzugsweise ist der Rollstuhl motorbetrieben.

Der Vorteil eines motorbetriebenen Rollstuhls liegt darin, dass der Rollstuhlinsasse sich leicht und ohne fremde Hilfe fortbewegen kann.

Erfindungsgemäß ist der Sitz an bzw. im Fahrgestell über eine Kippvorrichtung gelagert.

Über die Lagerung eines Sitzes über einer Kippvorrichtung ist auch bei einer Steigung oder einem Gefälle des Bodens eine permanente waagrechte Sitzposition des Rollstuhlinsassen möglich. Vorzugsweise ist die Kippvorrichtung derart angeordnet, dass der Sitz um eine gedachte Drehachse auf etwa halber Lage des Rollstuhls bewegbar ist.

Der Vorteil einer solchen Lage der Kippvorrichtung besteht darin, dass der Schwerpunkt des Rollstuhls tief liegt und dadurch der Rollstuhl eine hohe Stabilität aufweist.

Vorzugsweise ist die Kippvorrichtung derart angeordnet, dass der Sitz um eine gedachte Drehachse etwa auf Höhe der Laufrollen bewegbar ist.

Dies ist besonders vorteilhaft, da die Lage der Kippvorrichtung in unmittelbarer Laufrollennähe dem Rollstuhl eine besonders hohe Stabilität verleiht.

Vorzugsweise ist die Kippvorrichtung derart mit einem Neigungssensor wirkverbunden, dass die Sitzposition in einer voreingestellten Position, insbesondere einer waagrechten Position verbleibt.

Dies ist vorteilhaft, da bei einem Gefälle, wie dies beispielsweise beim Herunterfahren des Rollstuhls von Treppenstufen auftritt, ein Rausrutschen des Rollstuhlinsassen aus dem Sitz vermieden wird.

Vorzugsweise ist jede Laufrolle einzeln mittels einer Servolenkung bewegbar.

Dies ist von Vorteil, weil auf diese Art und Weise eine leichte Lenkung der Laufrollen möglich ist.

Vorzugweise umfasst das Lenksystem Lenkexzenter, welche mittels Seilen gegenläufig miteinander verbunden sind.

Der Einsatz von Lenkexzentern ermöglicht eine platzsparende Konstruktion.

Erfindungsgemäß ist die Aufhängung an den einzelnen Laufrollen in Form von Führungsrohren ausgebildet.

Da die Führungsrohre ausfahrbar sind, können die Laufrollen an die Topographie des Bodens angepasst werden.

Vorzugsweise sind die Führungsrohre über einen Linearantrieb pneumatisch, hydraulisch oder magnetisch ausfahrbar.

Dies ermöglicht ein leichtes und schnelles in Kontakt treten der Laufrollen mit der veränderten Bodenoberfläche.

Vorzugsweise sind in einem vorderen Bereich des Rollstuhls ein oder mehrere Sensoren zur topographischen Bestimmung des Bodens angeordnet.

Die topographische Bestimmung des Bodens bietet vorab Informationen über die Bodengegebenheiten, die ein vorausschauendes Ansteuern der Laufrollen ermöglicht. Dadurch wird ein schnelles Fortkommen des Rollstuhls gewährleistet. Ausserdem kann mit Hilfe der topographischen Bestimmung auch eine Hubbewegung durchgeführt werden. Auf diese Art und Weise ist beispielsweise ein Treppensteigen des Rollsuhls möglich.

Vorzugsweise sind im Bereich einzelner, insbesondere aller Laufrollen Distanzsensoren angeordnet, mit welchen der Abstand vom Sensor zum Boden bestimmbar ist.

Die Distanzsensoren bestimmen den Abstand zwischen Laufrolle und Boden. Nimmt dieser Abstand zu, dann wird der Abstand durch das Ausfahren der Führungsrohre wieder verringert.

Vorzugsweise sind die Distanzsensoren derart im Bereich der Laufrollen angeordnet, dass die Sensoren in Fahrtrichtung vor der jeweiligen Laufrolle auf den Boden weisen.

Auf diese Art und Weise kann vorzeitig eine auftretende Abstandsänderung zwischen Laufrolle und Boden erkannt werden.

Vorzugsweise weist der Rollstuhl ein Steuerungsgerät für einen oder mehrere Antriebsmotoren auf.

So ist eine Steuerung, Regelung und Überwachung von einem oder mehreren Antriebsmotoren möglich.

Vorzugsweise ist das Steuerungsgerät mit einer Rückfahrkamera verbunden.

Mittels der Rückfahrkamera, können vorteilhafterweise auch Hindernisse beim Rückwärtsfahren erkannt werden.

Die Erfindung wird im Folgenden anhand von Ausführungsbeispielen in Figuren weiter erläutert. Hierbei zeigen:
- Figur 1:: Perspektivische Darstellung einer Ausführungsform eines Fahrgestells
- Figur 2:: Schematische Darstellung einer Kippvorrichtung bei unterschiedlicher Neigung einer Bodenoberfläche
- Figur 3:: Schematische Darstellung einer Anordnung von Laufrollen
- Figur 4:: Schematische Darstellung einer Lenkgeometrie
- Figur 5:: Schematische Darstellung von Lenkexzentern
- Figur 6:: Schematische Darstellung einer Anordnung von Lenkexzentern an einer Aufhängung
- Figur 7:: Schematische Darstellung einer Aufhängung
- Figur 8:: Schematische Darstellung eines Längsschnitts einer Aufhängung
- Figur 9:: Darstellung unterschiedlicher Zustände eines Rollstuhls beim Überwinden von Treppen
- Figur 10:: Schematische Darstellung eines Rollstuhls beim Überwinden eines Hindernisses

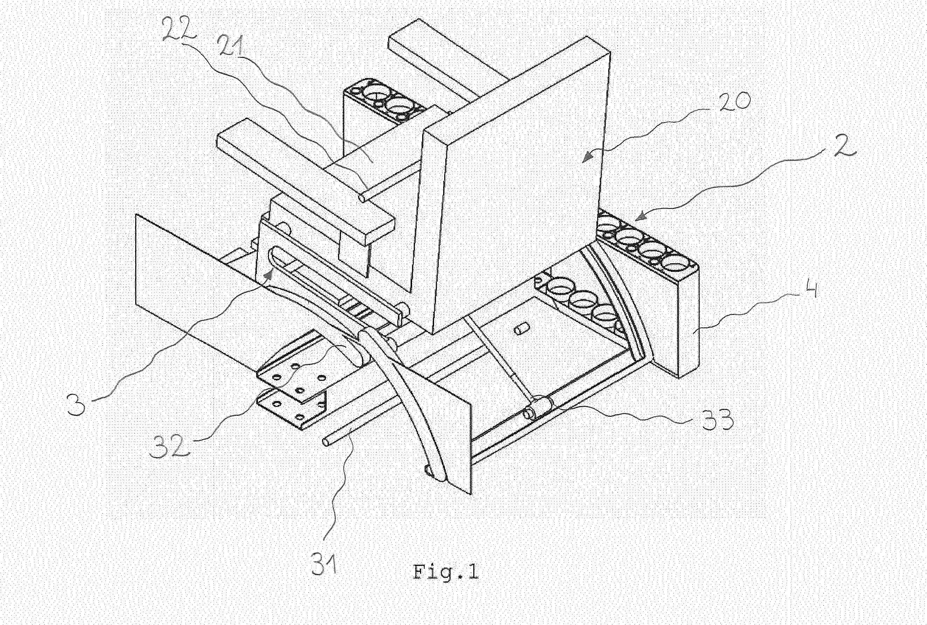

Figur 1 zeigt eine Ausführungsform eines Fahrgestells 2 für einen Rollstuhl 1 zur Überwindung von Hindernissen. An dem Fahrgestell 2 sind ein Sitz 20, eine Kippvorrichtung 3, und eine Seitenwand 4 links und eine Seitenwand 4 rechts (nicht gezeigt) angeordnet. Der Sitz 20 umfasst eine Sitzfläche 21 und eine Achse durch den Schwerpunkt 22 von Sitz 20 und einer Person. Die Kippvorrichtung 3 umfasst eine gedachte Drehachse 31, eine Rollenführung 32 und eine Trapezgewindespindel 33. Die Rollenführung 32 ermöglicht eine Bewegung des Sitzes 20 um die gedachte Drehachse 31. Die Trapezgewindespindel 33 stellt entsprechend einer Neigung einer Bodenoberfläche 30 einen Neigungswinkel ein. auf diese Art und Weise wird die Sitzfläche 21 auch bei Neigung der Bodenoberfläche 30 in einer waagrechten Position gehalten.

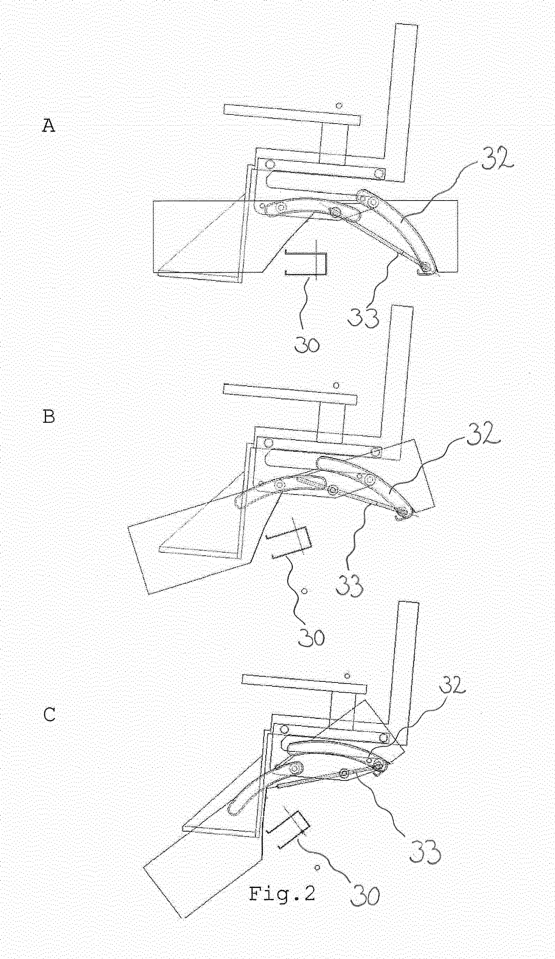

In Figur 2 wird eine Kippvorrichtung 3 bei unterschiedlicher Neigung einer Bodenoberfläche 30 dargestellt, welche beispielhaft für einen Treppenabstieg des Rollstuhls 1 ist. In Zustand A ist die Bodenoberfläche 30 in waagrechter Lage. Eine Sitzfläche 21, eine Rollenführung 32 und eine Trapezgewindespindel 33 befinden sich in Ausgangslage. In Zustand B ist die Bodenoberfläche 30 um einen Winkel < 45 ° nach unten geneigt (Bsp. Treppenabstieg). Die Sitzfläche 21 bleibt in der Ausgangslage, während sich die Rollenführung 32 um die gedachte Drehachse 31 (hier nicht gezeigt, siehe Fig. 1) bewegt und die Trapezgewindespindel 33 ihren Winkel relativ zur geneigten Bodenoberfläche 30 beibehält. Zustand C zeigt eine Neigung der Bodenoberfläche 30 von 45° (Bsp. maximale Neigung der Treppe beim Treppenabstieg). Die Sitzfläche 21 befindet sich wiederum in der Ausgangslage. Die Rollenführung 32 bewegt sich weiter um die gedachte Drehachse 31 und die Trapezgewindespindel 33 behält ihren Winkel relativ zur geneigten Bodenoberfläche 30 bei.

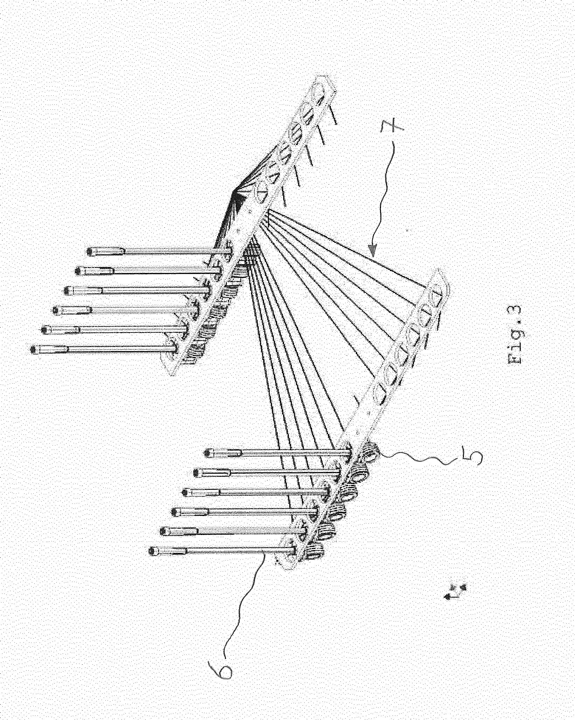

Figur 3 zeigt die schematische Anordnung von Laufrollen 5 des Rollstuhls 1 in zwei Reihen. Jede der Laufrollen 5 ist mittels einer Aufhängung 6 in Form eines Führungsrohres in einer rechten oder einer linken Seitenwand 4 (hier nicht gezeigt, siehe Fig. 1) angeordnet.

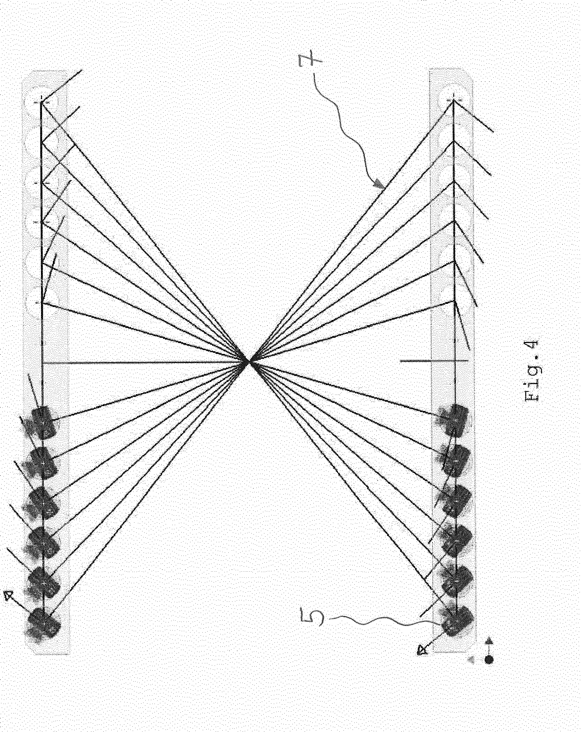

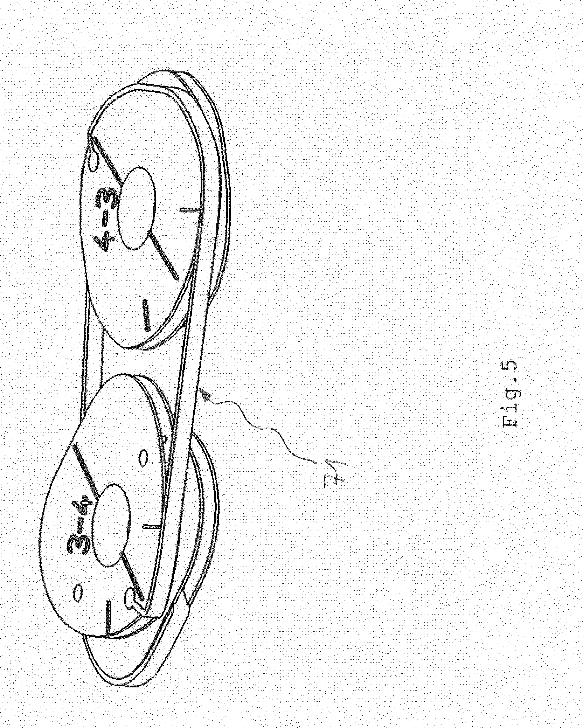

Wie in Figur 3 und 4 gezeigt stehen die Rollen mittels eines Lenksystems 7 miteinander in Kontakt. Das Lenksystem 7 umfasst Lenkexzenter 71, die in Fig. 5 schematisch dargestellt sind und mittels Seilen gegenläufig miteinander verbunden sind.

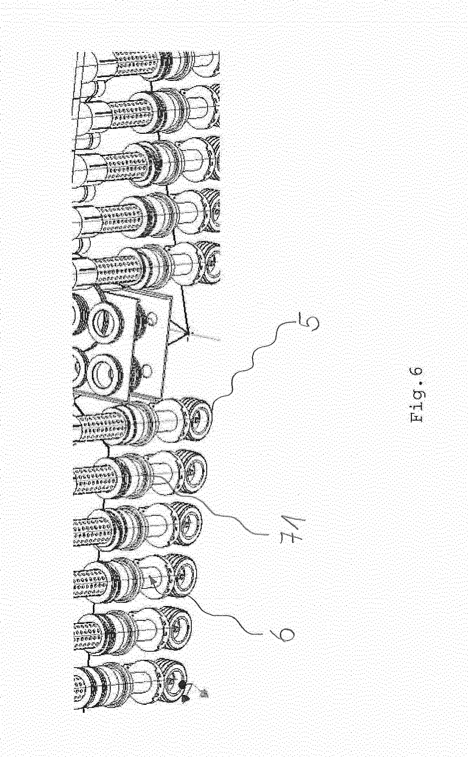

In Figur 6 ist eine Anordnung der Lenkexzenter 71 zur Lenkung der Laufrollen 5 an den Führungsrohren 6 gezeigt.

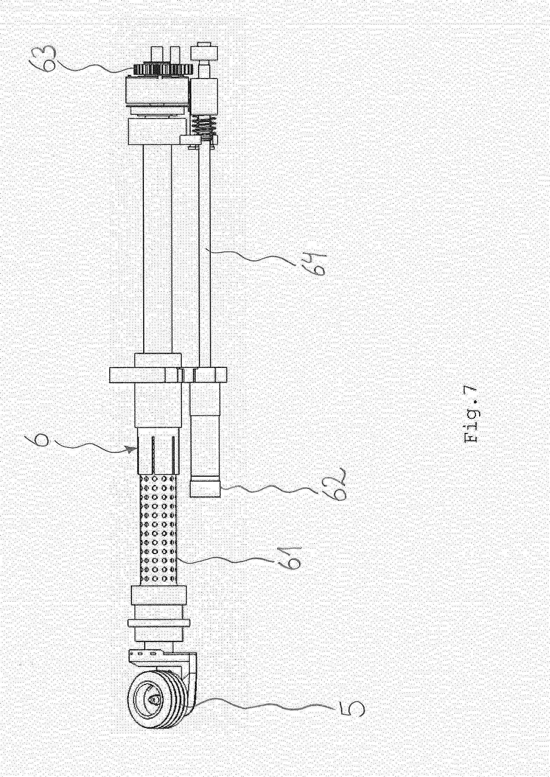

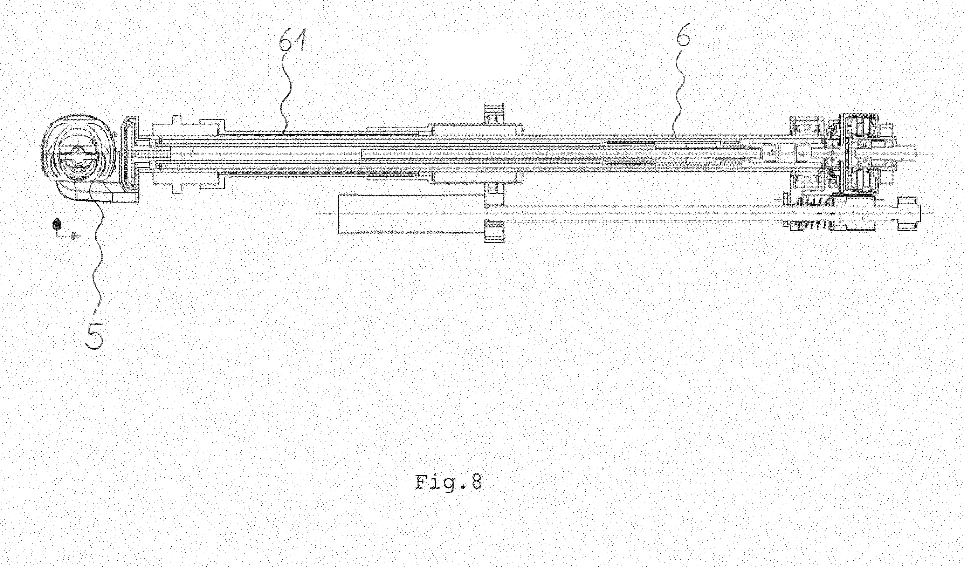

Figur 7 und Figur 8 zeigen ein Rollenmodul umfassend eine Laufrolle 5 und eine Aufhängung 6 in Form eines Führungsrohres. Die Aufhängung 6 umfasst ein Übertragungsrohr 61, welches mit Hilfe eines Motors 61, eines Zahnradantriebs 63 und einer Hubspindel 64, linear angetrieben, aus- und eingefahren werden kann. Auf diese Art und Weise können die Laufrollen 5 an die Gegebenheiten einer Bodenoberfläche 30 angepasst werden.

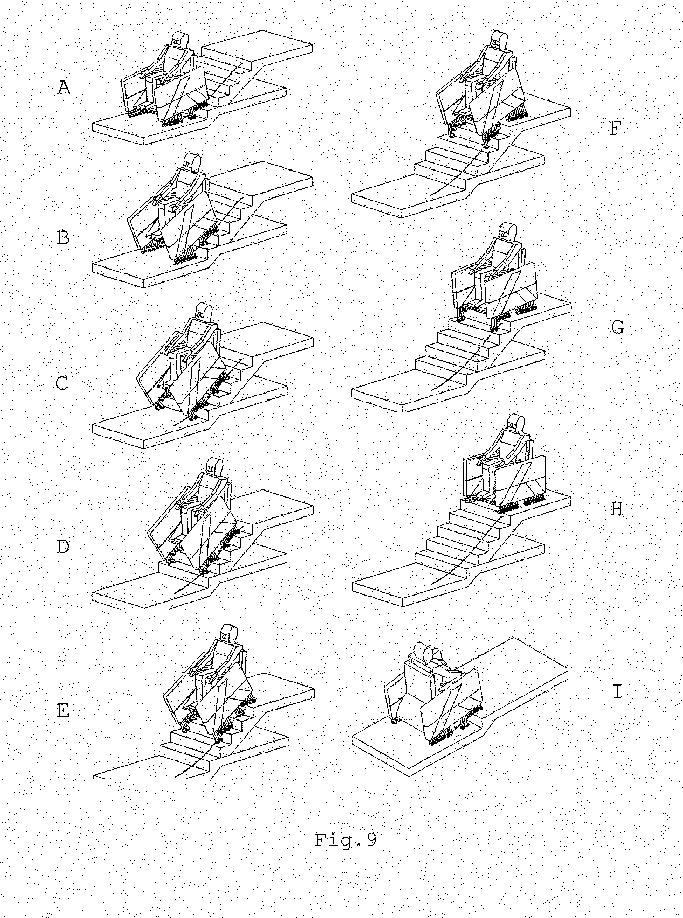

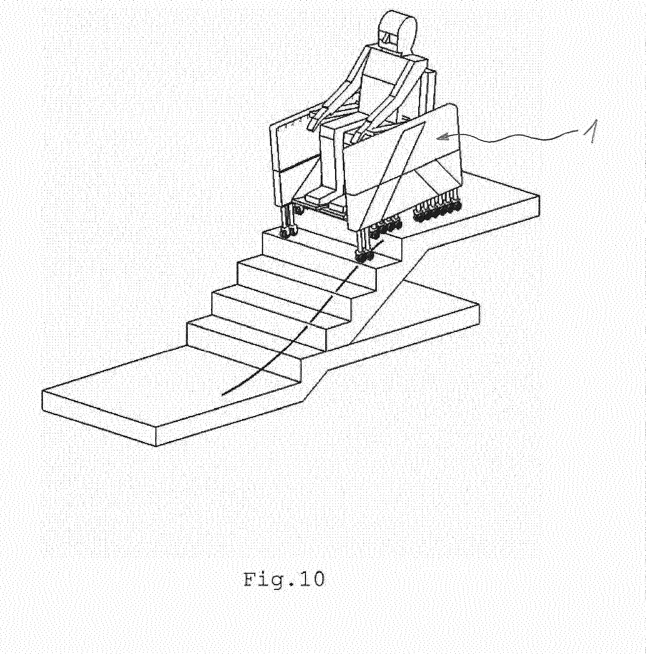

Die Figuren 9 und 10 zeigen unterschiedliche Positionen eines Rollstuhls 1 beim Überwinden eines Hindernisses. Die Zustände A-H zeigen das Herunterfahren einer Treppe und der Zustand I das Hinauffahren einer Treppenstufe. In allen gezeigten Zuständen bleibt die Sitzfläche 21 in der Ausgangsstellung während sich die Seitenwände 4 der Neigung der Treppe anpassen.

## Patentansprüche

1. Rollstuhl zur Überwindung von Hindernissen, insbesondere Stufen und Treppen, mit mehreren Laufrollen (5), wobei die Laufrollen (5) in mindestens zwei Reihen angeordnet sind und
die Reihen an einer linken und einer rechten Seite des Rollstuhls (1) angeordnet sind;
mit einem Fahrgestell (2), an oder in welchem ein Sitz (20) angeordnet ist, wobei der Sitz (20) an bzw. im Fahrgestell (2) über eine Kippvorrichtung (3) gelagert ist, dass er bei der Überwindung eines Hindernisses in einer im wesentlichen waagrechten Sitzposition verbleibt; und jede Laufrolle (5) über je mindestens eine Aufhängung (6) an dem Fahrgestell (2) angeordnet ist, dass die Aufhängung (6) gegenüber der Trittfläche einer Stufe in Fahrtrichtung einen Winkel von < 90 ° einschliesst,
**dadurch gekennzeichnet, dass** die Aufhängung (6) an den einzelnen Laufrollen (5) in Form von Führungsrohren ausgebildet ist.

2. Rollstuhl nach Anspruch 1, **dadurch gekennzeichnet, dass** er mit Antriebsmotoren betrieben ist.

3. Rollstuhl nach Anspruch 1, **dadurch gekennzeichnet, dass** die Kippvorrichtung (3) derart angeordnet ist, dass der Sitz (20) um eine gedachte Drehachse (31) auf etwa halber Lage des Rollstuhls (1) bewegbar ist.

4. Rollstuhl nach Anspruch 1, **dadurch gekennzeichnet, dass** die Kippvorrichtung (3) derart angeordnet ist, dass der Sitz (20) um eine gedachte Drehachse (31) etwa auf Höhe der Laufrollen (5) bewegbar ist.

5. Rollstuhl nach einem der Ansprüche 1, 3 oder 4, **dadurch gekennzeichnet, dass** die Kippvorrichtung (3) derart mit einem Neigungssensor wirkverbunden ist, dass die Sitzposition in einer voreingestellten Position, insbesondere einer waagrechten Position verbleibt.

6. Rollstuhl nach einem der Ansprüche 1 bis 5, **dadurch gekennzeichnet, dass** jede Laufrolle (5) einzeln mit Servolenkung (7) bewegbar ist.

7. Rollstuhl nach Anspruch 6, **dadurch gekennzeichnet, dass** die Servolenkung (7) Lenkexzenter (71) umfasst, welche mittels Seilen gegenläufig miteinander verbunden sind.

8. Rollstuhl nach Anspruch 8, **dadurch gekennzeichnet, dass** die Führungsrohre über einen Linearantrieb pneumatisch, hydraulisch oder magnetisch ausfahrbar sind.

9. Rollstuhl nach einem der Ansprüche 1 bis 9, **dadurch gekennzeichnet, dass** in einem vorderen Bereich des Rollstuhls (1) ein oder mehrere Sensoren zur topographischen Bestimmung des Bodens angeordnet sind.

10. Rollstuhl nach einem der Ansprüche 1 bis 10, **dadurch gekennzeichnet, dass** an dem Rollstuhl (1) im Bereich einzelner, insbesondere aller Laufrollen (5) Distanzsensoren angeordnet sind, mit welchen der Abstand vom Sensor zum Boden bestimmbar ist.

11. Rollstuhl nach Anspruch 11, **dadurch gekennzeichnet, dass** die Distanzsensoren derart im Bereich der Laufrollen (5) angeordnet sind, dass die Sensoren in Fahrtrichtung vor der jeweiligen Laufrolle (5) auf den Boden weisen.

12. Rollstuhl nach einem der Ansprüche 2 bis 12, **dadurch gekennzeichnet, dass** er ein Steuerungsgerät für einen oder mehrere Antriebsmotoren aufweist.

13. Rollstuhl nach einem der Ansprüche 1 bis 13, **dadurch gekennzeichnet, dass** das Steuerungsgerät mit einer Rückfahrkamera verbunden ist.

## Claims

1. A wheelchair for overcoming obstacles, in particular steps and stairs, having a plurality of castors (5), the castors (5) being arranged in at least two rows,
and the rows are arranged on a left and a right side of the wheelchair (1);
with a chassis (2) on or in which a seat (20) is arranged, the seat (20) being mounted on or in the chassis (2) by means of a tilting device (3) so that it remains in a substantially horizontal sitting position when overcoming an obstacle; and each castor (5) being arranged on the chassis (2) by means of at least one suspension (6) in each case, in that the suspension (6) encloses an angle of < 90° with respect to the tread surface of a step in the direction of travel,
wherein the suspension (6) on the individual castors (5) is in the form of guide tubes.

2. Wheelchair according to claim 1, wherein it is operated by drive motors.

3. Wheelchair according to claim 1, wherein the tilting device (3) is arranged in such a way that the seat (20) can be moved about an imaginary axis of rotation (31) at approximately half the position of the wheelchair (1).

4. Wheelchair according to claim 1, wherein the tilting device (3) is arranged in such a way that the seat (20) is movable about an imaginary axis of rotation (31) approximately at the level of the castors (5).

5. Wheelchair according to one of the claims 1, 3 or 4, wherein the tilting device (3) is operatively connected to an inclination sensor in such a way that the seat position remains in a preset position, in particular a horizontal position.

6. Wheelchair according to one of the claims 1 to 5, wherein each castor (5) can be moved individually with power steering (7).

7. Wheelchair according to claim 6, wherein the power steering (7) comprises steering eccentrics (71) which are connected to one another in opposite directions by means of cables.

8. Wheelchair according to claim 8, wherein the guide tubes can be extended pneumatically, hydraulically or magnetically via a linear drive.

9. Wheelchair according to one of the claims 1 to 9, wherein one or more sensors for topographical determination of the ground are arranged in a front region of the wheelchair (1) .

10. Wheelchair according to one of the claims 1 to 10, wherein that distance sensors are arranged on the wheelchair (1) in the region of individual, in particular all, castors (5), with which the distance from the sensor to the ground can be determined.

11. Wheelchair according to claim 11, wherein the distance sensors are arranged in the region of the castors (5) in such a way that the sensors point to the ground in front of the respective castor (5) in the direction of travel.

12. Wheelchair according to one of claims 2 to 12, wherein it has a control device for one or more drive motors.

13. Wheelchair according to one of the claims 1 to 13, wherein the control device is connected to a rear view camera.

## Revendications

1. Fauteuil roulant pour franchir des obstacles, en particulier des marches et des escaliers, avec une pluralité de roulettes (5), les roulettes (5) étant disposées en au moins deux rangées et les rangées sont disposées sur un côté gauche et un côté droit du fauteuil roulant (1) ;
avec un châssis (2) sur ou dans lequel est disposé un siège (20), le siège (20) étant monté sur ou dans le châssis (2) au moyen d'un dispositif de basculement (3) de telle sorte qu'il reste dans une position d'assise sensiblement horizontale lors du franchissement d'un obstacle, et chaque roulette (5) étant disposée sur le châssis (2) au moyen d'au moins une suspension (6), en ce que la suspension (6) forme un angle de < 90° par rapport à la surface de roulement d'une marche dans le sens de la marche,
**caractérisé en ce que** la suspension (6) des différentes roulettes (5) se présente sous la forme de tubes de guidage.

2. Fauteuil roulant selon la revendication 1, **caractérisé en ce qu'**il est actionné par des moteurs d'entraînement.

3. Fauteuil roulant selon la revendication 1, **caractérisé en ce que** le dispositif de basculement (3) est disposé de telle sorte que le siège (20) est mobile autour d'un axe de rotation imaginaire (31) à environ la moitié de la position du fauteuil roulant (1.

4. Fauteuil roulant selon la revendication 1, **caractérisé en ce que** le dispositif de basculement (3) est disposé de telle sorte que le siège (20) est mobile autour d'un axe de rotation imaginaire (31) sensiblement au niveau des roulettes (5) .

5. Fauteuil roulant selon l'une des revendications 1, 3 ou 4, **caractérisé en ce que** le dispositif de basculement (3) est relié fonctionnellement à un capteur d'inclinaison de telle sorte que la position du siège reste dans une position prédéfinie, notamment une position horizontale.

6. Fauteuil roulant selon l'une des revendications 1 à 5, **caractérisé en ce que** chaque roulette (5) est mobile individuellement avec une direction assistée (7).

7. Fauteuil roulant selon la revendication 6, **caractérisé en ce que** la direction assistée (7) comprend des excentriques de direction (71) qui sont reliés entre eux dans des directions opposées au moyen de câbles.

8. Fauteuil roulant selon la revendication 8, **caractérisé en ce que** les tubes de guidage peuvent être étendus pneumatiquement, hydrauliquement ou magnétiquement via un entraînement linéaire.

9. Fauteuil roulant selon l'une des revendications 1 à 9, **caractérisé en ce qu'**un ou plusieurs capteurs pour la détermination topographique du sol sont disposés dans une zone avant du fauteuil roulant (1).

10. Fauteuil roulant selon l'une des revendications 1 à 10, **caractérisé en ce que** des capteurs de distance sont disposés sur le fauteuil roulant (1) dans la zone de certaines, en particulier de toutes les roulettes (5), avec lesquels la distance du capteur au sol peut être déterminée.

11. Fauteuil roulant selon la revendication 11, **caractérisé en ce que** les capteurs de distance sont disposés dans la zone des roulettes (5) de telle sorte que les capteurs pointent vers le sol devant la roulette respective (5) dans le sens de la marche.

12. Fauteuil roulant selon l'une des revendications 2 à 12, **caractérisé en ce qu'**il comporte un dispositif de commande d'un ou plusieurs moteurs d'entraînement.

13. Fauteuil roulant selon l'une des revendications 1 à 13, **caractérisé en ce que** le dispositif de commande est relié à une caméra de recul.
